(19) Europäisches Patentamt / European Patent Office / Office européen des brevets

(11) **EP 4 180 260 B1**

(12) **EUROPEAN PATENT SPECIFICATION**

(45) Date of publication and mention
of the grant of the patent:
**01.10.2025 Bulletin 2025/40**

(21) Application number: **21842706.0**

(22) Date of filing: **14.06.2021**

(51) International Patent Classification (IPC):
**B60L 7/14** *(2006.01)*    **B60L 15/20** *(2006.01)*
**B60L 3/00** *(2019.01)*    **B60L 58/15** *(2019.01)*
**B60L 7/26** *(2006.01)*    **B60T 17/22** *(2006.01)*

(52) Cooperative Patent Classification (CPC):
**B60L 7/26; B60L 3/0076; B60L 58/15;
B60T 17/221;** B60L 2240/12; B60L 2240/14;
B60L 2240/423; B60L 2250/10; B60L 2250/26;
B60L 2260/22; B60T 2270/60; Y02T 10/70;
Y02T 10/72

(86) International application number:
**PCT/JP2021/022477**

(87) International publication number:
**WO 2022/014231 (20.01.2022 Gazette 2022/03)**

(54) **CONTROL DEVICE FOR MOBILE BODY**

STEUERUNGSVORRICHTUNG FÜR MOBILEN KÖRPER

DISPOSITIF DE COMMANDE POUR CORPS MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.07.2020   JP 2020119785**

(43) Date of publication of application:
**17.05.2023   Bulletin 2023/20**

(73) Proprietor: **DENSO CORPORATION
Kariya-city, Aichi 448-8661 (JP)**

(72) Inventor: **KAMIO, Shigeru
Kariya-city, Aichi 4488661 (JP)**

(74) Representative: **TBK
Bavariaring 4-6
80336 München (DE)**

(56) References cited:
**WO-A1-2010/089889        WO-A1-97/10967
JP-A- 2015 061 450        JP-A- 2017 047 823
US-A1- 2018 093 571        US-B1- 9 702 304**

## Description

[Technical Field]

The present invention relates to a control device for mobile bodies.

[Background Art]

JP 6 064 375 B describes a conventional vehicle. The vehicle described in JP 6 064 375 B includes a motor for causing the vehicle to travel and a control device that controls a motor. In response to the detection of an abnormality in a braking device of the vehicle, the control device causes the motor to be regeneratively driven, thereby causing a braking force to be generated in the vehicle to stop the vehicle.

US 2018 / 093 571 A1 discloses a controller having the features in the preamble of claim 1. US 9 702 304 B1 and JP 2015 - 061 450 A disclose further prior art.

[Summary of the Invention]

If a motor is regeneratively driven with a battery being in a fully charged or nearly fully charged state in response to detection of an abnormality in a braking device, the battery would get overcharged. Leaving the battery overcharged leads to a concern that the lifetime of the battery is significantly reduced and, what is worse, a possible abnormality such as a malfunction of the battery occurs.

It should be noted that such a problem is not unique to vehicles but is a common problem for mobile bodies that are movable based on the power of a motor.

The object of the present invention is to provide a control device capable of causing, in response to occurrence of an abnormality in a braking device, a mobile body to stop with an abnormality in a battery prevented from occurring.

The above object is solved by a control device according to claim 1.

The battery does not suffer an abnormality immediately when overcharged but there is actually some leeway until occurrence of an abnormality after the time when the battery gets overcharged. Accordingly, by virtue of causing, in response to detection of an abnormality in the braking device, the motor to be regeneratively driven until the elapse of the predetermined grace time from the point of time when the abnormality is detected as in the above-described configuration, an abnormality can be prevented from occurring in the battery and a braking force can be obtained even if the battery is overcharged. Therefore, it is possible to stop the mobile body.

Further advantageous embodiments are disclosed in the dependent claims.

[Brief Description of the Drawings]

Fig. 1 is a block diagram illustrating a schematic configuration of a vehicle of a first embodiment;
Fig. 2 is a block diagram illustrating a schematic configuration of a control device of the vehicle of the first embodiment;
Fig. 3 is a block diagram illustrating a configuration of an EVECU of the first embodiment;
Fig. 4 is a map, which is used by the EVECU of the first embodiment, for calculating a basic torque command value T10* from an operation amount AP of an accelerator pedal, a shift position SP, and a vehicle speed VC;
Fig. 5 is a map used by the EVECU of the first embodiment, illustrating a relationship between the vehicle speed VC and a final torque command value T20*;
Fig. 6 is a flowchart illustrating a procedure of a process to be performed by the EVECU of the first embodiment;
Fig. 7 is a flowchart illustrating a procedure of a fail-safe control to be performed by the EVECU of the first embodiment;;
Fig. 8 is a map used by the EVECU of the first embodiment, illustrating a relationship between a pressing amount AP of the accelerator pedal and the final torque command value T20*;
Figs. 9(A) to (G) are timing charts illustrating transitions of an SOC value of a battery, the pressing amount AP of the accelerator pedal, the vehicle speed VC, a braking force for the vehicle 10, the final torque command value T20*, a lower limit DMmin of an energization duty value, and a counter C in the vehicle of the first embodiment;
Fig. 10 is a flowchart illustrating a procedure of a process to be performed by an EVECU of a second embodiment;
Fig. 11 is a map used by the EVECU of the second embodiment, illustrating a relationship between a charging current value Ib of a battery and a predetermined value ΔC;
Fig. 12 is a flowchart illustrating a procedure of a process to be performed by an EVECU of a third embodiment;
Fig. 13 is a flowchart illustrating a procedure of a process to set a final torque command value to be performed by the EVECU of the third embodiment; and
Fig. 14 is a map used by the EVECU of the third embodiment, illustrating a relationship between a counter C and a coefficient Kwin.

[Description of Embodiments]

Description will be given below on embodiments of a control device for vehicles with reference to the drawings. For the purpose of facilitating an understanding of the description, like reference numerals are attached to the same components in the drawing as much as possible and a redundant description is omitted.

<First Embodiment>

First, description will be given on a schematic configuration of a vehicle to be equipped with a control device of a first embodiment.

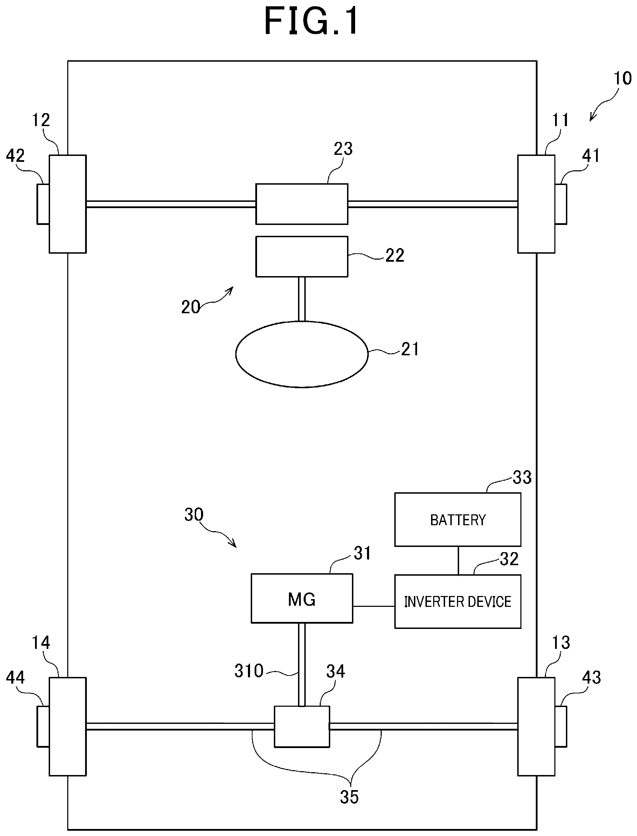

A vehicle 10 of the present embodiment illustrated in Fig. 1 is a so-called electric vehicle that travels with use of a motor generator 31 as a power source. In the present embodiment, the vehicle 10 corresponds to a mobile body and the travel and stop of the vehicle 10 correspond to the movement and stop of the mobile body. As illustrated in Fig. 1, the vehicle 10 includes a steering device 20, a power system 30, and braking devices 41 to 44.

The steering device 20 has a so-called steer-by-wire configuration, in which a steering wheel 21 to be operated by a driver is not mechanically connected to wheels 11, 12. The steering device 20 includes a steering angle sensor 22 and a turning device 23. The steering angle sensor 22 detects a rotation angle of the steering wheel 21, or steering angle. The turning device 23 changes respective turning angles of the right front wheel 11 and the left front wheel 12 based on the steering angle detected by the steering angle sensor 22.

The power system 30 includes a motor generator (MG: Motor Generator) 31, an inverter device 32, a battery 33, and a differential gear 34.

The inverter device 32 converts a direct-current power supplied from the battery 33 to a three-phase alternating-current power and supplies the converted three-phase alternating-current power to the motor generator 31.

The motor generator 31 operates as an electric motor during an acceleration of the vehicle 10. In a case where it operates as an electric motor, the motor generator 31 is driven based on a three-phase alternating-current power supplied from the inverter device 32. The power of the motor generator 31 is transmitted from an output shaft 310 thereof to a right rear wheel 13 and a left rear wheel 14 via the differential gear 34 and a drive shaft 35, thereby applying torque to the rear wheels 13, 14 to cause the vehicle 10 to accelerate.

The motor generator 31 can operate as an electrical generator during a deceleration of the vehicle 10. In a case where it operates as an electrical generator, the motor generator 31 is regeneratively driven to generate electric power. The regenerative drive of the motor generator 31 causes a braking force to be applied to each of the rear wheels 13, 14. A three-phase alternating-current power generated by the regenerative drive of the motor generator 31 is converted to a direct-current power through the inverter device 32 and charged in the battery 33.

Thus, in the vehicle 10 of the present embodiment, the right rear wheel 13 and the left rear wheel 14 function as drive wheels and the right front wheel 11 and the left front wheel 12 function as slave wheels. Hereinafter, the right rear wheel 13 and the left rear wheel 14 are also collectively referred to as drive wheels 13, 14 for the purpose of convenience.

The braking devices 41 to 44 are provided on the wheels 11 to 14 of the vehicle 10, respectively. The braking devices 41 to 44 include, for example, rotating bodies rotatable integrally with the wheels 11 to 14, brake pads provided facing the rotating bodies, and hydraulic circuits that apply hydraulic pressure to the brake pads to cause the brake pads to come into contact with and separate from the rotating bodies. In the braking devices 41 to 44, the brake pads are brought into contact with the rotating bodies by virtue of the hydraulic pressure from the hydraulic circuits, causing a friction force to be applied to the rotating bodies to apply a braking force to the wheels 11 to 14.

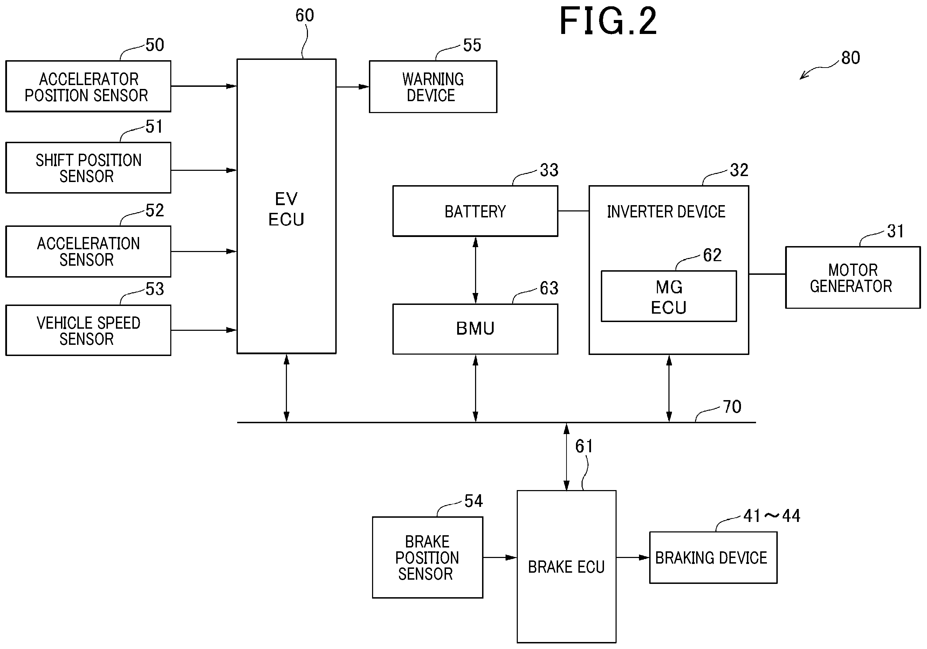

Next, a specific description will be given on an electrical configuration of the vehicle 10 with reference to Fig. 2.

As illustrated in Fig. 2, the vehicle 10 includes an accelerator position sensor 50, a shift position sensor 51, an acceleration sensor 52, a vehicle speed sensor 53, a brake position sensor 54, and a warning device 55. The vehicle 10 also includes, as sections that perform various controls, an EV (Electric Vehicle) ECU (Electronic Control Unit) 60, a brake ECU 61, a MGECU 62, and a BMU (Battery Management Unit) 63. These components provide a control device 80 of the present embodiment. In the present embodiment, the EVECU 60 corresponds to a motor controller.

The accelerator position sensor 50 detects an operation amount of the accelerator pedal of the vehicle 10 and outputs a signal corresponding to the detected operation amount of the accelerator pedal to the EVECU 60. In the present embodiment, the accelerator position sensor 50 corresponds to an accelerator position detector.

The shift position sensor 51 detects an operation position of a shift lever of the vehicle 10 and outputs a signal corresponding to the detected operation position of the shift lever to the EVECU 60.

The acceleration sensor 52 detects an acceleration in a forward direction of the vehicle 10 and outputs a signal corresponding the detected acceleration to the EVECU 60.

The vehicle speed sensor 53 detects a speed of travel in the forward direction, or vehicle speed, of the vehicle 10 and outputs a signal corresponding to the detected vehicle speed to the EVECU 60.

The brake position sensor 54 detects an operation position of the brake pedal of the vehicle 10 and outputs a signal corresponding to the detected operation position of the brake pedal to the brake ECU 61.

The warning device 55 is a device that provides a warning to the inside and outside of the vehicle. Examples of the warning device 55 include a speaker device that emits a sound within the interior of the vehicle to give warning to the inside of the vehicle and a lighting device that turns on a hazard lamp and a brake lamp to give warning to the outside of the vehicle.

The ECUs 60 to 63 each consist mainly of a microcomputer including a CPU, a memory, and the like. The ECUs 60 to 63 can receive a variety of information through an in-vehicle network 70 installed in the vehicle 10, such as a CAN.

The brake ECU 61 executes a program stored in advance in a memory thereof, thereby controlling the braking devices 41 to 44. For example, in response to detecting that the brake pedal is pressed with a foot based on the operation position of the brake pedal detected by the brake position sensor 54, the brake ECU 61 drives the braking devices 41 to 44 to apply a braking force to each of the wheels 11 to 14.

In addition, in response to detecting that the brake pedal is pressed with a foot, the brake ECU 61 sends a braking torque command value T30* to the EVECU 60. The braking torque command value T30* is a target value of a braking-direction torque to be outputted from the motor generator 31 to decelerate the vehicle 10. The brake ECU 61 sets the braking torque command value T30* such that a total of the braking force to be obtained by driving the braking devices 41 to 44 and the braking force to be obtained by the regenerative drive of the motor generator 31 reaches a target value of braking force required for the vehicle 10. The EVECU 60 causes the motor generator 31 to be regeneratively driven based on the braking torque command value T30*, thereby causing a braking force to be applied from the motor generator 31 to the drive wheels 13, 14.

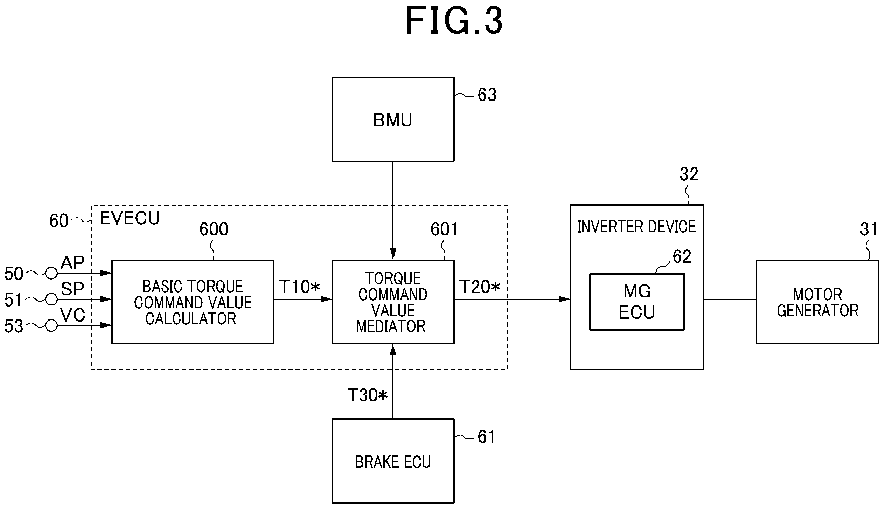

The EVECU 60 is a section that executes a program stored in advance in a memory thereof, thereby controlling the state of travel of the vehicle 10 in a comprehensive manner. As illustrated in Fig. 3, the EVECU 60 includes a basic torque command value calculator 600 and a torque command value mediator 601.

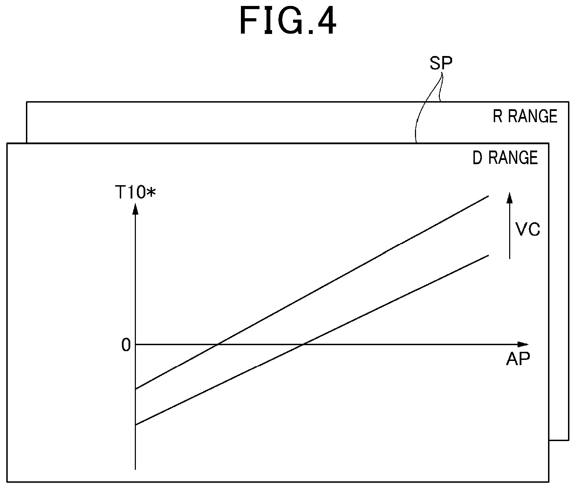

The respective output signals from the accelerator position sensor 50, the shift position sensor 51, and the vehicle speed sensor 53 are inputted to the basic torque command value calculator 600. The basic torque command value calculator 600 acquires information regarding an operation amount AP of the accelerator pedal, a shift position SP, and a vehicle speed VC based on the output signals from the sensors and calculates a basic torque command value T10* from the information with use of a map illustrated in Fig. 4. The basic torque command value T10* is a target value of torque to be outputted from the motor generator 31. For example, to accelerate the vehicle 10, i.e., to drive the motor generator 31, the basic torque command value T10* is set at a positive value. To decelerate the vehicle 10, i.e., to cause the motor generator 31 to perform a regenerative operation, the basic torque command value T10* is set at a negative value. The basic torque command value calculator 600 outputs the calculated basic torque command value T10* to the torque command value mediator 601.

In a case where no braking torque command value T30* is sent from the brake ECU 61, the torque command value mediator 601 sends the basic torque command value T10* as a final torque command value T20* to the inverter device 32.

In a case where the braking torque command value T30* is sent from the brake ECU 61, the torque command value mediator 601 gives higher priority to the braking torque command value T30* than the basic torque command value T10* and sends the braking torque command value T30* as the final torque command value T20* to the inverter device 32. The braking torque command value T30* is set at a negative value, that is, a value for the motor generator 31 to be regeneratively driven.

The MGECU 62 is provided in the inverter device 32. The MGECU 62 controls the motor generator 31 based on the final torque command value T20* sent from the torque command value mediator 601. Specifically, the MGECU 62 calculates an energization duty value DM based on the final torque command value T20* and drives the inverter device 32 based on the calculated energization duty value DM, thereby controlling the motor generator 31. It should be noted that the energization duty value DM is set within a range of $-100[\%] \leq DM \leq 100[\%]$. With the energization duty value DM being within $0[\%] < DM \leq 100[\%]$, the motor generator 31 is driven consuming an electric power of the battery 33. With the energization duty value DM being within $-100[\%] \leq DM < 0[\%]$, the motor generator 31 is regeneratively driven.

Thus, in a case where no braking torque command value T30* is sent from the brake ECU 61 to the EVECU 60, a drive torque or a regenerative torque corresponding to the basic torque command value T10* is to be outputted from the motor generator 31. It should be noted that the drive torque is a torque that is to be outputted from the motor generator 31 by supply of an electric power and capable of accelerating the vehicle 10. The regenerative torque is a torque that is to be generated by the regenerative drive of the motor generator 31 and capable of decelerating the vehicle 10. In contrast, in a case where the braking torque command value T30* is sent from the brake ECU 61 to the EVECU 60, the regenerative torque corresponding to the braking torque command value T30* is to be outputted from the motor generator 31.

As illustrated in Fig. 2, the BMU 63 detects an SOC (State of Charge) value of the battery 33 and manages the state of the battery 33 based on the detected SOC value. It should be noted that the SOC value indicates a charged state of the battery 33 in a range of 0 [%] to 100[%] with the assumption that a completely discharged state of the battery 33 is defined as 0[%] and a fully charged state of the battery 33 is defined as 100[%]. In the present embodiment, the BMU 63 corresponds to a battery controller.

In the meantime, in a case where the battery 33 is charged by the regenerative drive of the motor generator 31 while the battery 33 is in the fully charged or nearly fully charged state, the battery 33 is overcharged. Leaving the battery 33 overcharged is not favorable because it leads to a concern that the lifetime of the battery 33 is significantly reduced and, what is worse, a possible abnormality such as a malfunction of the battery occurs. Accordingly, in a case where such a situation occurs, the BMU 63 of the present embodiment provides a charging amount limitation request to the EVECU 60 in order to prevent the battery from being overcharged.

Specifically, the BMU 63 monitors whether the SOC value of the battery 33 is equal to or more than a predetermined value and determines, in response to the SOC value of the battery 33 being equal to or more than predetermined value, that the battery 33 is in the fully charged or nearly fully charged state. In response to the battery 33 being substantially in the fully charged or nearly fully charged state, the BMU 63 requests the EVECU 60 to limit regenerative power generation from the motor generator 31 to the battery 33. In the present embodiment, this request corresponds to the charging amount limitation request. As illustrated in Fig. 3, the charging amount limitation request sent from the EVECU 60 is received by the torque command value mediator 601 of the EVECU 60. In response to receiving the charging amount limitation request, the torque command value mediator 601 sets the final torque command value T20* such that the amount of the regeneratively generated power of the motor generator 31 is limited or the regeneration drive of the motor generator 31 is prohibited. The MGECU 62 controls the motor generator 31 based on the final torque command value T20*, thereby prohibiting the amount of the regeneratively generated power of the motor generator 31 or the regenerative drive of the motor generator 31 itself, which makes it possible to reduce overcharging of the battery 33. As a result, it is possible to prevent an abnormality as described above from occurring in the battery 33.

In addition, the brake ECU 61 monitors operations of the braking devices 41 to 44. In the present embodiment, the brake ECU 61 corresponds to an abnormality detector that detects an abnormality in the braking devices 41 to 44. In response to detection of an abnormality in the braking devices 41 to 44, the brake ECU 61 prohibits actuation of the braking devices 41 to 44 and sends an abnormality detection notification to the EVECU 60, accordingly. In response to receiving the abnormality detection notification sent from the brake ECU 61, the EVECU 60 performs a regenerative torque correction control to increase the regenerative torque of the motor generator 31 in decelerating the vehicle 10.

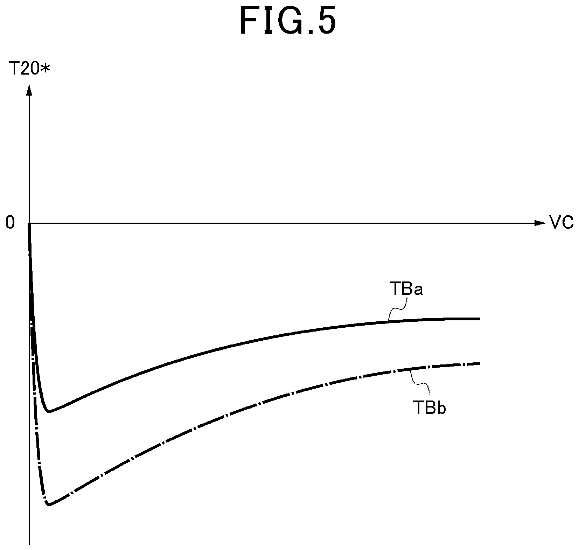

More specifically, the torque command value mediator 601 of the EVECU 60 sets the basic torque command value T10* as the final torque command value T20* in a case where the braking devices 41 to 44 are normal and the brake pedal is not pressed with a foot. As described above, the basic torque command value T10* is calculated from the operation amount AP of the accelerator pedal, the shift position SP, and the vehicle speed VC based on the map illustrated in Fig. 4. By virtue of setting the basic torque command value T10* based on the map illustrated in Fig. 4, the final torque command value T20* is set as indicated by a solid line in Fig. 5 in a case where the operation amount AP of the accelerator pedal is, for example, 0, that is, in decelerating the vehicle 10. As a result, the regenerative torque of the motor generator 31 changes as indicated by the solid line in Fig. 5 in accordance with the vehicle speed VC. Hereinafter, the regenerative torque of the motor generator 31 as indicated by the solid line in Fig. 5 is referred to as normal regenerative torque TBa for the purpose of convenience. The normal regenerative torque TBa is a deceleration torque corresponding to, for example, -0.2 [G].

In contrast, in a case where the braking devices 41 to 44 are abnormal, the torque command value mediator 601 of the EVECU 60 corrects the final torque command value T20* such that the regenerative drive of the motor generator 31 can cause the vehicle 10 to decelerate or stop. For example, in a case where the operation amount AP of the accelerator pedal is 0, the torque command value mediator 601 sets the final torque command value T20* at an emergency regenerative torque TBb indicated by a chain line in Fig. 5. The emergency regenerative torque TBb is a regenerative torque larger than the normal regenerative torque TBa and, for example, a maximum value of a settable regenerative torque of the motor generator 31. The emergency regenerative torque TBb is a deceleration torque corresponding to, for example, -0.4 [G]. By virtue of setting the final torque command value T20* at the emergency regenerative torque TBb, the regenerative torque of the motor generator 31 is increased, which makes it possible to decelerate or stop the vehicle 10 with a higher reliability even under a situation where the braking force applicable from the braking devices 41 to 44 to the wheels 11 to 14 becomes insufficient or no braking force is applicable from the braking devices 41 to 44 to the wheels 11 to 14 due to an abnormality in the braking devices 41 to 44.

In the meantime, in a case where the BMU 63 requests the EVECU 60 to limit the charging amount so as to prevent the battery 33 from being overcharged, the EVECU 60 is not allowed to perform the regenerative torque correction control to increase the amount of the regeneratively generated power of the motor generator 31 or a large limitation would be applied to performing the regenerative torque correction control. This would result in a disadvantage such as a failure in appropriately decelerating the vehicle 10.

However, there is some leeway until occurrence of a possible abnormality after the time when the battery 33 gets overcharged. In other words, an abnormality is unlikely to occur in the battery 33 as long as the motor generator 31 is regeneratively driven within the grace time. Taking advantage of the above, the EVECU 60 of the present embodiment causes, in response to occurrence of an abnormality in the braking devices 41 to 44, the motor generator 31 to be regeneratively driven in a manner to circumvent the limitation on the charging amount of the battery 33 based on the request from the BMU 63 during a period until the elapse of a predetermined time from a point of time when the abnormality is detected.

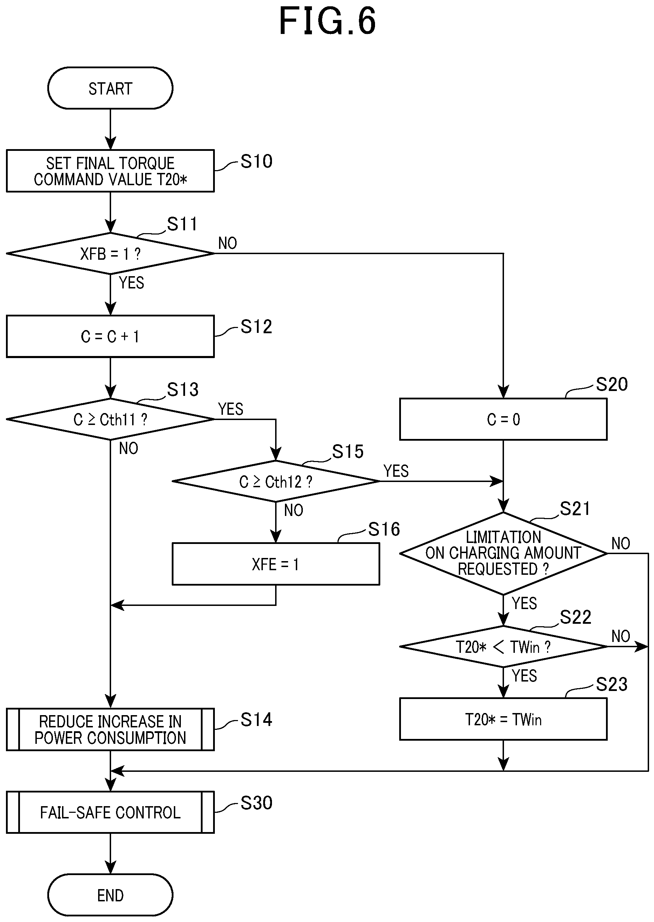

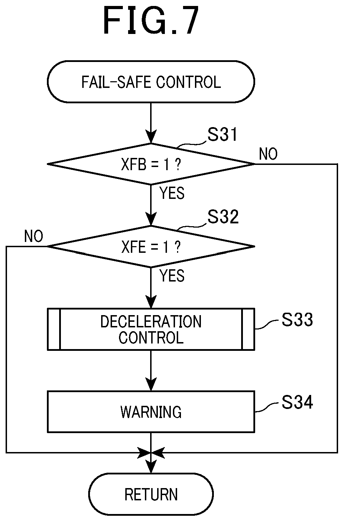

Next, a specific description will be given on a procedure of a process to be performed by the EVECU 60 with reference to Fig. 6 and Fig. 7. It should be noted that the EVECU 60 repeatedly performs the process illustrated in Fig. 6 in a predetermined cycle. In addition, an initial value of a forced vehicle-stop flag XFE, which is used for processes in Fig. 6 and Fig. 7, is set at 0.

As illustrated in Fig. 6, the torque command value mediator 601 of the EVECU 60 first sets, as a process in Step S10, the final torque command value T20*. Specifically, in a case where the braking devices 41 to 44 are normal, the torque command value mediator 601 sets the final torque command value T20* based on the basic torque command value T10* or the braking torque command value T30*. This causes the final torque command value T20* to be set at the normal regenerative torque TBa as indicated by the solid line in Fig. 5 in a case where, for example, the operation amount AP of the accelerator pedal is 0. In contrast, in a case where an abnormality occurs in the braking devices 41 to 44, the torque command value mediator 601 corrects the final torque command value T20* so as to increase the regenerative torque of the motor generator 31. For example, the torque command value mediator 601 sets the final torque command value T20* at the emergency regenerative torque TBb as indicated by the chain line in Fig. 5.

The EVECU 60 determines, as a process in Step S11 subsequent to Step S10, whether a brake abnormality flag XFB is 1. In response to the braking devices 41 to 44 being normal, the brake ECU 61 sends the brake abnormality flag XFB set at 0 to the EVECU 60. In response to an abnormality occurring in the braking devices 41 to 44, the brake ECU 61 sends the brake abnormality flag XFB set at 1 to the EVECU 60. Thus, the EVECU 60 performs the process in Step S11 based on the brake abnormality flag XFB sent from the brake ECU 61 as described above.

Specifically, in response to the brake abnormality flag XFB being 0, or the braking devices 41 to 44 being normal, the EVECU 60 makes a negative determination in the process in Step S11. In this case, the EVECU 60 sets, as a process in Step S20, a limitation recovery counter C at 0 and determines, as a process in Step S21, whether limitation on the charging amount of the battery 33 is requested by the BMU 63. In response to a negative determination being made in the process in Step S21, or in response to no request for a limitation on the charging amount of the battery 33 being provided by the BMU 63, the EVECU 60 temporarily terminates the process in Fig. 6. In this case, a torque corresponding to the basic torque command value T10* or the braking torque command value T30* is outputted from the motor generator 31.

In response to the EVECU 60 making a positive determination in the process in Step S21, or in response to a request for limiting the charging amount of the battery 33 being provided by the BMU 63, the torque command value mediator 601 of the EVECU 60 determines, as a process in Step S22, whether the final torque command value T20* set in the process in Step S10 is smaller than a limited torque command value TWin. The limited torque command value Twin is a limit value provided to the regenerative torque of the motor generator 31 in order to prevent the battery 33 from being overcharged in response to a charging amount limitation request being provided to the EVECU 60 by the BMU 63. The limited torque command value Twin is set in advance and stored in a ROM of the EVECU 60. The limited torque command value Twin is set at, for example, 0. In response to a positive determination being made in the process in Step S22, or in response to the final torque command value T20* being smaller than the limited torque command value TWin, the torque command value mediator 601 sets, as a process in Step S23, the final torque command value T20* at the limited torque command value Twin and the process proceeds to Step S30. In this case, a regenerative torque corresponding to the limited torque command value Twin is outputted from the motor generator 31 or no regenerative torque is outputted from the motor generator 31. As a result, the amount of the regeneratively generated power of the motor generator 31 is limited and thus overcharging of the battery 33 is reduced.

In response to a negative determination being made in the process in Step S22, or in response to the final torque command value T20* being equal to or more than the limited torque command value TWin, the torque command value mediator 601 skips the process in Step S23 and the process proceeds to Step S30. In this case, since it is not necessary to limit the torque of the motor generator 31, a torque corresponding to the basic torque command value T10* or the braking torque command value T30* is outputted from the motor generator 31.

The EVECU 60 performs, as a process in Step S30, a fail-safe control. A procedure of a process of the fail-safe control is as illustrated in Fig. 7.

As illustrated in Fig. 6, the EVECU 60 determines, as a process in Step S31, whether the brake abnormality flag XFB is 1. In a case where the process in Step S30 is performed after a negative determination is made in the process in Step S11 illustrated in Fig. 6, the brake abnormality flag XFB is set at 0. The EVECU 60 thus makes a negative determination in the process in Step S31 in this case. Accordingly, the EVECU 60 temporarily terminates the process illustrated in Fig. 6 after terminating the control illustrated in Fig. 7.

In contrast, in response to a positive determination being made in the process in Step S11, or in response to the brake abnormality flag XFB being 1, the EVECU 60 determines that an abnormality occurs in the braking devices 41 to 44. In this case, the EVECU 60 increments, as a process in Step S12, a value of the limitation recovery counter C. The EVECU 60 determines, as a process in Step S13 subsequent to Step S12, whether the value of the limitation recovery counter C is equal to or more than a first predetermined value Cth11. In the present embodiment, a grace time TG from the point of time when the battery 33 gets overcharged to occurrence of an abnormality is determined in advance by experiment or the like. With the assumption that time shorter than the grace time TG is defined as a vehicle-stop determination time T11, the first predetermined value Cth11 is set at a value allowing for determining whether the vehicle-stop determination time T11 elapses from the point of time when an abnormality in the braking devices 41 to 44 is detected, which is stored in advance in the ROM of the EVECU 60. The vehicle-stop determination time T11, which is time for determining whether it is a timing for the vehicle to be forcefully stopped, is set at, for example, 20 minutes.

At the initial point of time when an abnormality in the braking devices 41 to 44 is detected, the value of the limitation recovery counter C is smaller than the first predetermined value Cth11. The EVECU 60 thus makes a negative determination in the process in Step S13. In this case, the EVECU 60 performs, as a process in Step S14, a power consumption increase control. In a case where requested to limit the charging amount of the battery 33 by the BMU 63, the EVECU 60 performs the power consumption increase control, which causes the power consumption of an electric load, or a target to which an electric power is to be supplied from the battery 33 in the vehicle 10, in order to lower the amount of charging power of the battery 33 in the fully charged or nearly fully charged state. For example, the EVECU 60 causes a lighting device of the vehicle 10 to be automatically turned on to lower the amount of charging power of the battery 33. It should be noted that the EVECU 60 may deliberately lower a power efficiency of the motor generator 31 to lower the amount of charging power of the battery 33.

After performing the process in Step S14, the EVECU 60 performs, as the process in Step S30, the fail-safe control illustrated in Fig. 7. At this time, the brake abnormality flag XFB is set at 1 and the forced vehicle-stop flag XFE is set at 0. Thus, when performing the process in Step S31, or the process to determine whether the brake abnormality flag XFB is 1, the EVECU 60 makes a positive determination in that process as illustrated in Fig. 7. Subsequently, when performing a process in Step S32, or a process to determine whether the forced vehicle-stop flag XFE is 1, the EVECU 60 makes a negative determination in that process. As a result, the EVECU 60 terminates the process illustrated in Fig. 7 and temporarily terminates the process illustrated in Fig. 6.

Then, at the elapse of the vehicle-stop determination time from the point of time when the abnormality in the braking devices 41 to 44 is detected, the EVECU 60 will make a positive determination in the process in Step S13 as illustrated in Fig. 6. In this case, the EVECU 60 determines, as a process in Step S15, whether the value of the limitation recovery counter C is equal to or more than a second predetermined value Cth12. The second predetermined value Cth12 is set at a value allowing for determining whether a predetermined grace time T12 elapses from the point of time when an abnormality in the braking devices 41 to 44 is detected, which is stored in advance in the ROM of the EVECU 60. The grace time T12 is set at, for example, 30 minutes.

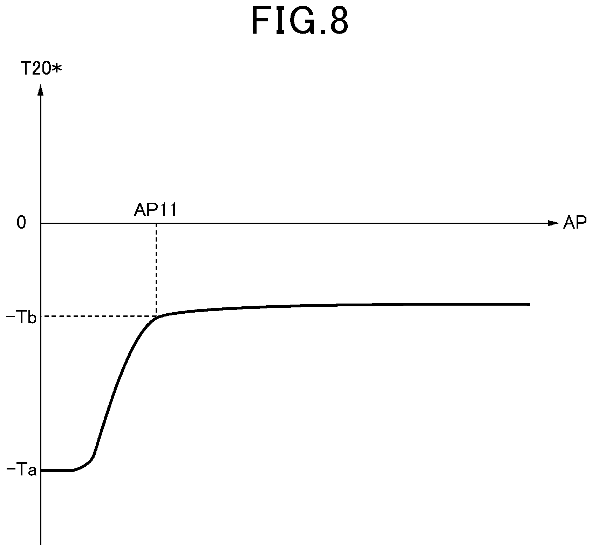

In response to a negative determination being made in the process in Step S15, or in response to the value of the limitation recovery counter C being less than the second predetermined value Cth12, the EVECU 60 sets, as a process in Step S16, the forced vehicle-stop flag XFE at 1 and then performs the power consumption increase control in Step S14 and the fail-safe control in Step S15. In this case, the EVECU 60 makes a positive determination in the process in Step S31 and also makes a positive determination in the process in Step S32 as illustrated in Fig. 7. The EVECU 60 thus performs, as a process in Step S33, a deceleration control based on the operation amount AP of the accelerator pedal in order to forcefully stop the vehicle 10. Specifically, the EVECU 60, which has a map indicating a relationship between the operation amount AP of the accelerator pedal and the final torque command value T20* as illustrated in Fig. 8, calculates the final torque command value T20* from the operation amount AP of the accelerator pedal based on the map illustrated in Fig. 8. In the map illustrated in Fig. 8, in a case where the operation amount AP of the accelerator pedal is close to 0, or in the case where the accelerator pedal is not pressed with a foot, the final torque command value T20* is set at -Ta. In addition, in a case where the operation amount AP of the accelerator pedal is equal to or more than a predetermined value AP11, or in a case where the accelerator pedal is pressed with a foot, the final torque command value T20* is set at -Tb larger than -Ta. -Ta is, for example, a maximum value of the settable regenerative torque of the motor generator 31. -Ta is a deceleration torque corresponding to, for example, -0.4 [G]. -Tb is a deceleration torque corresponding to, for example, -0.2 [G].

By virtue of the final torque command value T20* being set based on the map illustrated in Fig. 8, an output torque of the motor generator 31 is set at a negative value irrespective of the operation amount AP of the accelerator pedal. That is to say, the regenerative torque is outputted from the motor generator 31, which makes it possible to forcefully stop the vehicle 10 by a braking force applied to the drive wheels 13, 14.

As illustrated in Fig. 7, the EVECU 60 drives, as a process in Step S34 subsequent to Step S33, the warning device 55, thereby issuing a warning to the inside and outside of the vehicle. By virtue of the warning, a passenger in the vehicle 10 and a person outside the vehicle can know that the vehicle 10 is to be emergently stopped. After performing the process in Step S34, the EVECU 60 terminates the process illustrated in Fig. 7 and temporarily terminates the process illustrated in Fig. 6.

Thus, in a case where the brake abnormality flag XFB is 1, or even in a case where an abnormality occurs in the braking devices 41 to 44, the EVECU 60 of the present embodiment performs none of the processes in Steps S21 to S23, or the processes to limit the regenerative drive of the motor generator 31, until the elapse of the grace time TG from the point of time when the abnormality is detected. In other words, the EVECU 60 ignores the limitation request from the BMU 63 until the elapse of the grace time TG from the point of time when the abnormality in the braking devices 41 to 44 is detected and controls the motor generator 31 so that the emergency regenerative torque TBb is generated.

Then, at the elapse of the grace time from the point of time when the abnormality in the braking devices 41 to 44 is detected, the EVECU 60 makes a positive determination in the process in Step S15 illustrated in Fig. 6. In this case, the EVECU 60 performs the processes in Steps S21 to S23. As a result, in a case where a limitation on the charging amount of the battery 33 is requested by the BMU 63, the final torque command value T20* is limited to the limited torque command value Twin, thereby limiting the amount of the regeneratively generated power of the motor generator 31 to reduce overcharging of the battery 33.

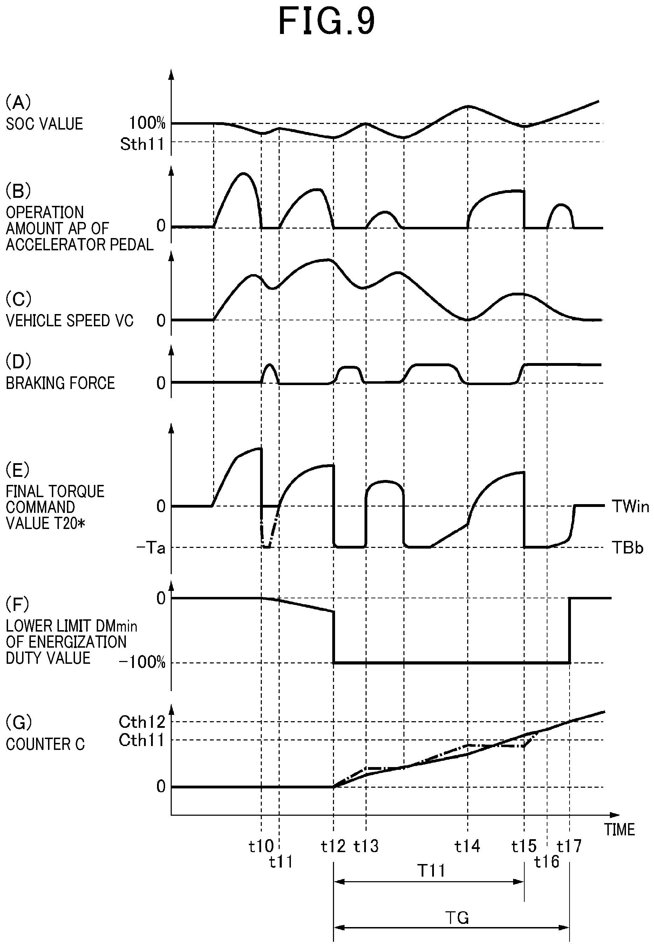

Next, description will be given on an operation example of the vehicle 10 of the present embodiment with reference to Fig. 9.

As illustrated in Fig. 9(A), in response to the SOC value of the battery 33 being equal to or more than a predetermined value Sth11, the BMU 63 requests the EVECU 60 to limit the charging amount of the battery 33. Accordingly, in a case where the final torque command value T20* is smaller than the limited torque command value Twin, the EVECU 60 limits the final torque command value T20* to the limited torque command value Twin. The operation amount AP of the accelerator pedal thus reaches 0 at a time point t10 as illustrated in Fig. 9(B), which causes the final torque command value T20* to be limited to the limited torque command value Twin even under a situation where the final torque command value T20* should normally be set at a negative value -Ta as indicated by a chain line in Fig. 9(E). It should be noted that the operation example in Fig. 9 illustrates by way of example a case where the limited torque command value Twin is set at 0. By virtue of the limited torque command value Twin being set at 0 as described above, a lower limit DMmin of the energization duty value of the motor generator 31 is limited to 0[%] as illustrated in Fig. 9(F). The motor generator 31 is thus not regeneratively driven.

Thus, by virtue of the final torque command value T20* being limited to the limited torque command value Twin as described above, the braking force to be applied to the drive wheels 13, 14 decreases. The EVECU 60 requests the brake ECU 61 to cause the braking devices 41 to 44 to output a braking force corresponding to the decrease. As a result, the braking force is applied to the vehicle 10 as illustrated in Fig. 9(D), enabling the vehicle 10 to decelerate.

Then, when the accelerator pedal is pressed with a foot at a time point t11 as illustrated in Fig.9(B), the motor generator 31 is driven to consume the amount of charging power of the battery 33, causing the SOC value of the battery 33 to decrease as illustrated in Fig. 9(A). The limited torque command value Twin is relaxed, accordingly, causing the lower limit DMmin of the energization duty value of the motor generator 31 to be relaxed as illustrated in Fig. 9(F).

Should an abnormality occur in at least one of the braking devices 41 to 44 at a time point t12 under such a situation, the EVECU 60 sets the final torque command value T20* at the emergency regenerative torque TBb as illustrated in Fig. 9(E). Should the emergency regenerative torque TBb be set at the maximum value -Ta of the settable regenerative torque of the motor generator 31, the lower limit DMmin of the energization duty value of the motor generator 31 is set at -100[%] as illustrated in Fig. 9(F). The limitation on the amount of the regeneratively generated power of the motor generator 31 is thus substantially lifted. This causes the motor generator 31 to be regeneratively driven, applying the braking force to the drive wheels 13, 14. The braking force is thus applied to the vehicle 10 as illustrated in Fig. 9(D) even in a case where the abnormality occurs in the braking devices 41 to 44.

In addition, in a case where an abnormality occurs in at least one of the braking devices 41 to 44 at the time point t12 as illustrated in Fig. 9(G), the value of the limitation recovery counter C increases with time from the point of time when it occurs.

When the accelerator pedal is pressed with a foot after the time point t12 at, for example, a time point t13 as illustrated in Fig. 9(B), the final torque command value T20* is set at a positive value based on the operation amount AP of the accelerator pedal as illustrated in Fig. 9(E). This causes the drive torque to be outputted from the motor generator 31, thus accelerating the vehicle 10 at the time point t13 as illustrated in Fig. 9(C). After that, in a case where the accelerator pedal is pressed with a foot, the drive torque corresponding to the operation amount AP of the accelerator pedal is outputted from the motor generator 31, thereby accelerating the vehicle 10. In addition, in a case where the operation amount AP of the accelerator pedal reaches 0, the emergency regenerative torque TBb is outputted from the motor generator 31, thereby decelerating the vehicle 10.

It is then assumed that after a driver presses the accelerator pedal with his or her foot at a time point t14 as illustrated in Fig. 9(B), the value of the limitation recovery counter C reaches the first predetermined value Cth11 at a time point t15 as illustrated in Fig. 9(G). That is to say, it is assumed that the vehicle-stop determination time T11 elapses from the point of time when the abnormality in the braking devices 41 to 44 is detected at the time point t15. At this time, the EVECU 60 performs the processes in Steps S33 and S34 illustrated in Fig. 7. That is to say, at the time point t15, the EVECU 60 starts the control to forcefully stop the vehicle 10 and issues a warning to the inside and outside of the vehicle. This causes the final torque command value T20* to be set at a negative value irrespective of the value of the operation amount AP of the accelerator pedal as illustrated in Fig. 9(E), thus enabling the vehicle 10 to decelerate with a higher reliability as illustrated in Fig. 9(C).

It should be noted that the final torque command value T20* varies with the operation amount AP of the accelerator pedal as illustrated in Fig. 8. Thus, in a case where the accelerator pedal is pressed with a foot at a time point t16 as illustrated in Fig. Fig. 9(B), the final torque command value T20* increases as illustrated in Fig. 9(E). That is to say, the regenerative torque of the motor generator 31 decreases. This enables the vehicle 10 to behave in accordance with the intention of the driver even in a case where the vehicle 10 is to be forcefully stopped.

It is then assumed that the value of the limitation recovery counter C reaches the second predetermined value Cth12 at a time point t17. That is to say, it is assumed that the grace time TG elapses from the point of time when the abnormality in the braking devices 41 to 44 is detected at the time point t17. At this time, the EVECU 60 sets the final torque command value T20* at the limited torque command value TWin, or 0, as illustrated in Fig. 9(E), so that the motor generator 31 is not to be regeneratively driven. Thus, overcharging of the battery 33 is reduced at and after the time point t17, which makes it possible to prevent an abnormality from occurring in the battery 33.

The above-described control device 80 of the vehicle 10 of the present embodiment can achieve workings and effects described in (1) to (4) below.

(1) In response to an abnormality in the braking devices 41 to 44 being detected by the brake ECU 61, the EVECU 60 causes, irrespective of the charged state of the battery 33, the motor generator 31 to be regeneratively driven until the elapse of the predetermined grace time TG from the point of time when the abnormality is detected so that the emergency regenerative torque TBb, which is larger than the normal regenerative torque TBa, is generated. The battery 33 does not suffer an abnormality immediately when overcharged but there is actually some leeway until occurrence of an abnormality after the time when the battery 33 gets overcharged. Accordingly, by virtue of causing, in response to detection of an abnormality in the braking devices 41 to 44, the motor to be regeneratively driven until the elapse of the predetermined grace time TG from the point of time when the abnormality is detected, an abnormality can be prevented from occurring in the battery 33 and a braking force can be obtained even if the battery 33 is overcharged. Therefore, it is possible to stop the vehicle 10.

(2) At the elapse of the vehicle-stop determination time T11 from the point of time when an abnormality in the braking devices 41 to 44 is detected, the EVECU 60 causes the motor generator 31 to be regeneratively driven so that the vehicle 10 is automatically decelerated to be stopped. This configuration makes it possible to stop the vehicle 10 before occurrence of an abnormality in the battery 33 and thus to ensure the safety of the vehicle 10.

(3) The EVECU 60 calculates the final torque command value T20* from the operation amount AP of the accelerator pedal with use of the map illustrated in Fig. 8, thereby setting a deceleration of the vehicle 10 based on the operation amount AP of the accelerator pedal. This configuration makes it possible to achieve a deceleration of the vehicle 10 according to a driving operation of a driver and thus to improve drivability.

(4) The EVECU 60 increases the power consumption of an electric load, or a target to which an electric power is to be supplied from the battery 33, until the elapse of the grace time TG from the point of time when an abnormality in the braking devices 41 to 44 is detected. This configuration makes it possible to prevent overcharging of the battery 33 with a higher accuracy.

<Second Embodiment>

Next, description will be given on a control device 80 of a second embodiment. A difference from the control device 80 of the first embodiment will be mainly described below.

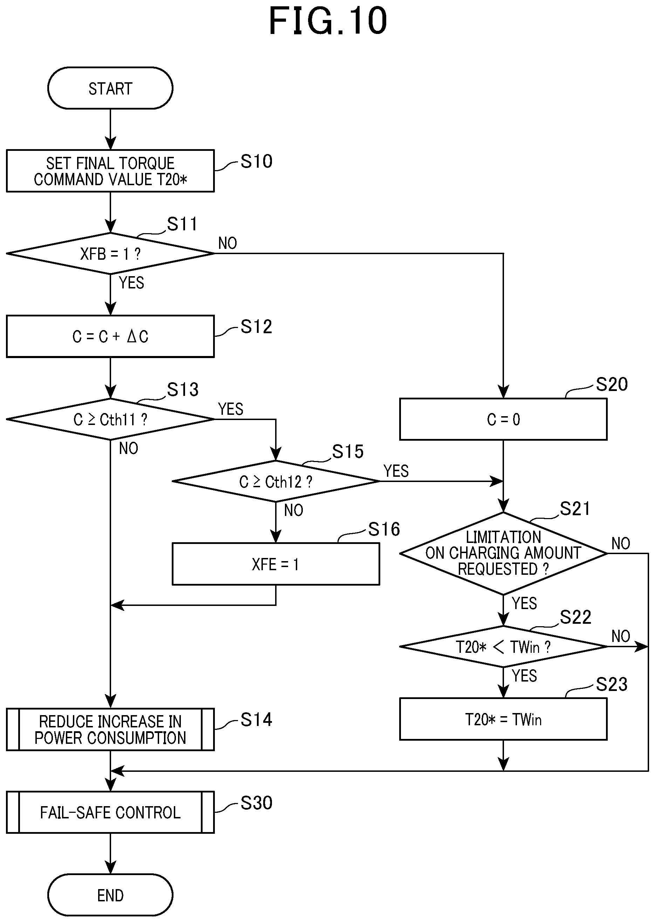

The EVECU 60 of the present embodiment adds a predetermined value ΔC to the previous value of the limitation recovery counter C in the process in Step S12 as illustrated in Fig. 10, thereby obtaining the value of the current limitation recovery counter C.

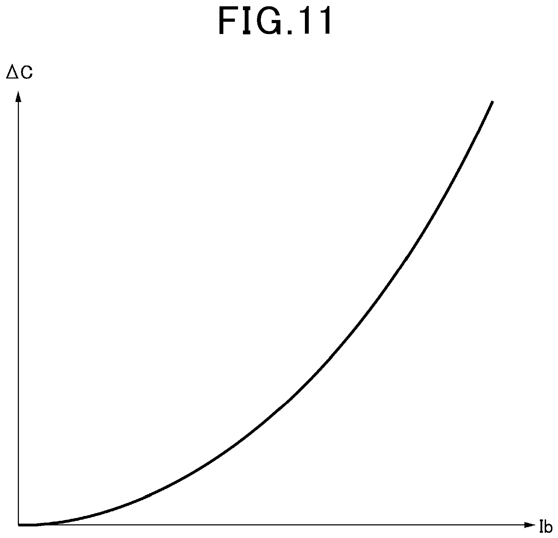

Specifically, the EVECU 60 uses a map indicating a relationship between a charging current value Ib of the battery 33 and the predetermined value ΔC as illustrated in Fig. 11 to calculate the predetermined value ΔC from the charging current value Ib. The charging current value Ib of the battery 33 is a value of a current to be supplied to the battery 33 by charging the battery 33 by causing the motor generator 31 to be regeneratively driven. Thus, the charging current value of the battery 33 increases with an increase in the electric power to be charged in the battery 33. In the present embodiment, the charging current value of the battery 33 corresponds to a regeneratively generated power generated by the regenerative drive of the motor generator 31. It should be noted that the EVECU 60 acquires information regarding the charging current value Ib of the battery 33 from the BMU 63.

After calculating the predetermined value $\Delta C$ based on the map illustrated in Fig. 11, the EVECU 60 adds the predetermined value $\Delta C$ to the previous value of the limitation recovery counter C, thereby obtaining the value of the current limitation recovery counter C. This causes the limitation recovery counter C to change as indicated by a two-dot chain line in Fig. 9(G).

In the map illustrated in Fig. 11, the predetermined value $\Delta C$ is set such that it increases with an increase in the charging current value of the battery 33. This causes timings to make positive determinations in the processes in Step S13 and Step S15, i.e., a timing to forcefully stop the vehicle 10 and a timing to limit the regeneratively generated power of the motor generator 31, to come earlier with an increase in the charging current value of the battery 33 after detection of an abnormality in the braking devices 41 to 44. As a result, the vehicle-stop determination time T11 and the grace time TG are reduced with an increase in the charging current value of the battery 33.

The above-described control device 80 of the vehicle 10 of the present embodiment can achieve a working and an effect described in (5) below.

(5) The EVECU 60 changes the vehicle-stop determination time T11 and the grace time TG based on the charging current value of the motor generator 31 at and after the point of time when an abnormality in the braking devices 41 to 44 is detected. This configuration makes it possible to set the vehicle-stop determination time T11 and the grace time TG in accordance with the actual state of the regeneratively generated power of the motor generator 31 and thus to forcefully stop the vehicle 10 and limit the amount of the regeneratively generated power of the motor generator 31 in a more appropriate manner.

<Third Embodiment>

Next, description will be given on a control device 80 of a third embodiment. A difference from the control device 80 of the first embodiment will be mainly described below.

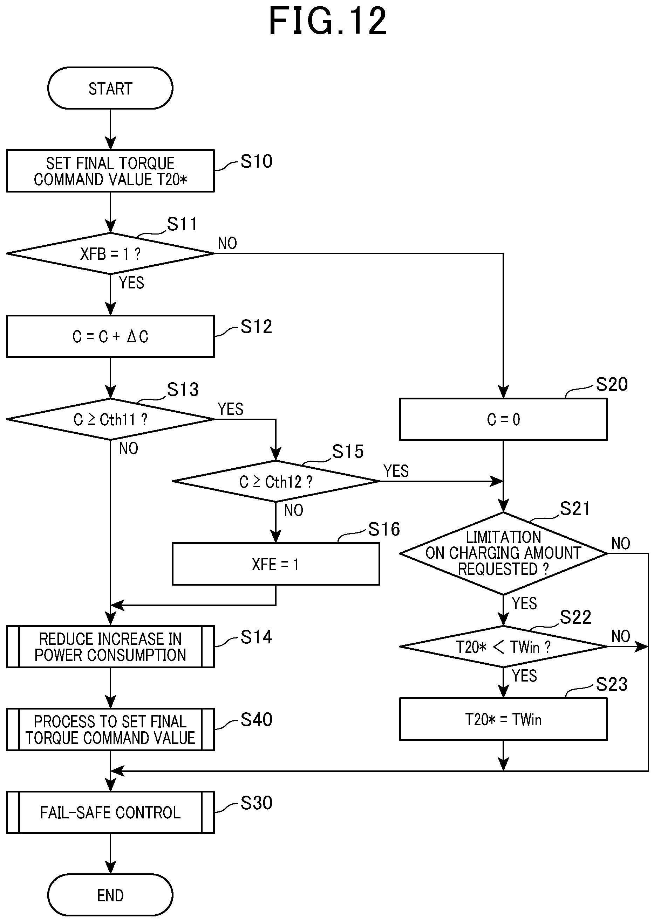

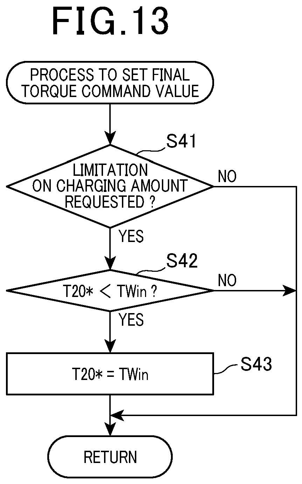

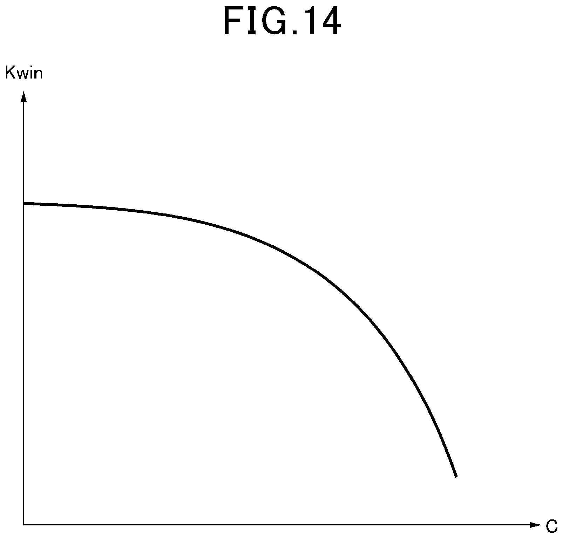

As illustrated in Fig. 12, the EVECU 60 of the present embodiment performs, as a process in Step S40 subsequent to Step S14, a process to set the final torque command value T20*. Specifically, the EVECU 60 first sets, as a process in Step S41, the limited torque command value Twin as illustrated in Fig. 13. The EVECU 60 has a map indicating a relationship between the value of the limitation recovery counter C and a coefficient Kwin as illustrated in Fig. 14. The limitation recovery counter C, which increases from the point of time when an abnormality in the braking devices 41 to 44 is detected as described above, indicates time elapsed from the point of time when the abnormality in the braking devices 41 to 44 is detected. Thus, the map illustrated in Fig. 14 corresponds to a map indicating a relationship between the time elapsed from the point of time when an abnormality in the braking devices 41 to 44 is detected and the coefficient Kwin. As illustrated in Fig. 14, the coefficient Kwin is set at a smaller value with an increase in the time elapsed from the point of time when an abnormality in the braking devices 41 to 44 is detected.

After calculating the coefficient Kwin with use of the map illustrated in Fig. 14, the EVECU 60 calculates the limited torque command value TWin from a regenerative torque maximum value TWinMax and the coefficient Kwin based on an expression f1 below. The regenerative torque maximum value TWinMax, which is a maximum value of the regenerative torque of the motor generator 31, is a deceleration torque corresponding to, for example, -0.4 [G].

$$TWin = Kwin \times TWinMax \quad (f1)$$

By virtue of setting the limited torque command value TWin based on the expression f1, the limited torque command value TWin is caused to be closer to 0 from the regenerative torque maximum value TWinMax with an increase in the time elapsed from the point of time when an abnormality in the braking devices 41 to 44 is detected.

The torque command value mediator 601 of the EVECU 60 determines, as a process in Step S42 subsequent to Step S41, whether the final torque command value T20* set in the process in Step S10 is smaller than the limited torque command value TWin as illustrated in Fig. 13. In response to a positive determination being made in Step S42, or in response to the final torque command value T20* being smaller than the limited torque command value TWin, the torque command value mediator 601 sets, as a process in Step S43, the final torque command value T20* at the limited torque command value TWin and returns to the process illustrated in Fig. 12. This causes the final torque command value T20* to be closer to 0 from the regenerative torque maximum value TWinMax, i.e., causes the regenerative torque to change from a maximum state to a 0 state, with an increase in the time elapsed from the point of time when an abnormality in the braking devices 41 to 44 is detected.

In contrast, in response to a negative determination being made in the process in Step S42, the torque command value mediator 601 returns to the process illustrated in Fig. 12 without performing the process in Step S43.

The above-described control device 80 of the vehicle 10 of the present embodiment can achieve a working and an effect described in (6) below.

(6) The EVECU 60 causes the regenerative torque of the motor generator 31 to change based on the time elapsed from the point of time when an abnormality in the braking devices 41 to 44 is detected. This configuration makes it possible to reduce the amount of the regeneratively generated power of the motor generator 31 with an increase in the time elapsed from the point of time when the abnormality in the braking devices 41 to 44 is detected and thus to prevent overcharging of the battery 33 with a higher accuracy.

<Other Embodiments>

It should be noted that the embodiments can be implemented in the following form.

- The EVECU 60 of the third embodiment may use a map indicating a relationship between the charging current value Ib of the battery 33 and the coefficient Kwin in place of the map illustrated in Fig. 14. This enables the EVECU 60 to change the regenerative torque of the motor generator 31 based on the regeneratively generated power of the motor generator 31. Such a configuration can also achieve the same or similar working and effect as or to those described in (6) above.
- The configurations of the control device 80 in the embodiments are applicable to not only the electric vehicle 10 but also any mobile body including an electric motor as a power source, examples of which include a mobility such as a vertical takeoff and landing aircraft that moves in the sky.
- The control device 80 and the control method thereof according to the present invention may be implemented by one or a plurality of dedicated computers each including a processor programed to execute one or a plurality of functions exemplified by a computer program and a memory. The control device 80 and the control method thereof according to the present invention may be implemented by a dedicated computer including a processor including one or a plurality of dedicated hardware logic circuits. The control device 80 and the control method thereof according to the present invention may be implemented by one or a plurality of dedicated computers each including a combination of a processor programed to execute one or a plurality of functions, a memory, and a processor including one or a plurality of hardware logic circuits. The computer program may be stored as instructions to be executed by a computer in a computer-readable non-transition tangible recording medium. The dedicated hardware logic circuit and the hardware logic circuit may each be implemented by a digital circuit including a plurality of logic circuits or an analog circuit.
- The present invention is not limited to the above-described specific examples. The scope of the present invention encompasses the above-described specific examples changed in design by those skilled in the art as needed as long as they provide the features of the appended claims. The components of each of the above-described specific examples and the locations, conditions, shapes, etc., thereof are not limited to those described by way of example and can be changed as needed. A combination of the components of each of the above-described specific examples may be changed as needed unless a technical inconsistency occurs.

## Claims

1. A control device (80) for mobile bodies that is a control device (80) installable in a mobile body (10), the mobile body (10) including a motor (31) configured to operate as a power source for movement and a battery (33) configured to supply an electric power to the motor (31) and to be charged with an electric power generated by a regenerative drive of the motor (31), the regenerative drive of the motor (31) and an actuation of a braking device (41, 42, 43, 44) allowing a braking force to be applied to the mobile body (10), the control device (80) comprising:

   an abnormality detector (61) configured to detect an abnormality in the braking device (41, 42, 43, 44); and
   a motor controller (60) configured to control the motor (31), wherein
   when a regenerative torque generated by the regenerative drive of the motor when the braking device (41, 42, 43, 44) is normal is defined as a normal regenerative torque (TBa),
   the motor controller (60) is configured to cause, in response to the abnormality detector (61) detecting the abnormality in the braking device (41, 42, 43, 44), the motor (31) to be regeneratively driven irrespective of a charged state of the battery (33) until an elapse of a predetermined grace time (TG) from a point of time when the abnormality is detected so that an emergency regenerative torque (TBb) larger than the normal regenerative torque (TBa) is generated, and **characterized in that**:

      when time shorter than the grace time (TG) is defined as a vehicle-stop determination time (T11),
      the motor controller (60) is configured to cause, at an elapse of the vehicle-stop determination time (T11) from the point of time when the abnormality in the braking device (41, 42, 43, 44) is detected, the motor (31) to be regeneratively driven so that the mobile body (10) is decelerated to be stopped,
      the motor controller (60) is configured to change the vehicle-stop determination time (T11) on a basis of a regeneratively generated power generated by the regenerative drive of the motor (31) at and after the point of time when the abnormality in the braking device (41, 42, 43, 44) is detected.

2. The control device (80) for mobile bodies according to claim 1, wherein
the motor controller (60) is configured to cause the regenerative torque of the motor (31) to change on a basis of time elapsed from the point of time when the abnormality in the braking device (41, 42, 43, 44) is detected or on a basis of a regeneratively generated power of the motor (31).

3. The control device (80) for mobile bodies according to claim 1 or 2, further comprising

an accelerator position detector (50) configured to detect an operation amount of an accelerator pedal of the mobile body (10), wherein
the motor controller (60) is configured to set a deceleration of the mobile body (10) on a basis of the operation amount of the accelerator pedal detected by the accelerator position detector (50).

4. The control device (80) for mobile bodies according to any one of claims 1 to 3, further comprising:

a battery controller (63) configured to control the battery (33), wherein
in response to determining that the battery (33) is likely to be overcharged, the battery controller (63) is configured to make a request to the motor controller (60) to limit the regenerative drive from the motor (31) to the battery (33), and
the motor controller (60) is configured to ignore the request from the battery controller (63) and control the motor (31) so that the emergency regenerative torque (TBb) is generated until the elapse of the grace time (TG) from the point of time when the abnormality in the braking device (41, 42, 43, 44) is detected.

5. The control device (80) for mobile bodies according to claim 4, wherein
the motor controller (60) is configured to change the grace time (TG) on a basis of a regeneratively generated power generated by the regenerative drive of the motor (31) at and after the point of time when the abnormality in the braking device (41, 42, 43, 44) is detected.

6. The control device (80) for mobile bodies according to any one of claims 1 to 5, wherein
the motor controller (60) is configured to increase a power consumption of an electric load until the elapse of the grace time (TG) from the point of time when the abnormality in the braking device (41, 42, 43, 44) is detected, the electric load being a target to which the electric power is to be supplied from the battery (33).

**Patentansprüche**

1. Steuerungsvorrichtung (80) für mobile Körper, die eine Steuerungsvorrichtung (80) ist, die in einem mobilen Körper (10) installierbar ist, wobei der mobile Körper (10) einen Motor (31), der konfiguriert ist, um als eine Leistungsquelle für eine Bewegung betrieben zu werden, und eine Batterie (33) umfasst, die konfiguriert ist, um dem Motor (31) elektrische Leistung zuzuführen und mit einer elektrischen Leistung geladen zu werden, die durch einen regenerativen Antrieb des Motors (31) erzeugt wird, wobei der regenerative Antrieb des Motors (31) und eine Betätigung einer Bremsvorrichtung (41, 42, 43, 44) ermöglichen, eine Bremskraft auf den mobilen Körper (10) auszuüben, wobei die Steuerungsvorrichtung (80) Folgendes aufweist:

eine Abnormalitätserfassungseinrichtung (61), die konfiguriert ist, um eine Abnormalität bei der Bremsvorrichtung (41, 42, 43, 44) zu erfassen; und
eine Motorsteuerung (60), die konfiguriert ist, den Motor (31) zu steuern, wobei
wenn ein Regenerationsdrehmoment, das durch den regenerativen Antrieb des Motors erzeugt wird, wenn die Bremsvorrichtung (41, 42, 43, 44) normal ist, als normales Regenerationsdrehmoment (TBa) definiert wird,
die Motorsteuerung (60) konfiguriert ist, im Ansprechen auf die Abnormalitätserfassungseinrichtung (61), die die Abnormalität bei der Bremsvorrichtung (41, 42, 43, 44) erfasst, den Motor (31) zu veranlassen, von einem Zeitpunkt, wenn die Abnormalität erfasst wird, bis zu einem Verstreichen einer vorbestimmten Nachlaufzeit (TG) ungeachtet von einem Ladezustand der Batterie (33) regenerativ angetrieben zu werden, sodass ein Notfall-Regenerationsdrehmoment (TBb) erzeugt wird, das größer als das normale Regenerationsdrehmoment (TBa) ist, und **dadurch gekennzeichnet, dass**:

wenn eine Zeit, die kürzer als die Nachlaufzeit (TG) ist, als eine Fahrzeugstoppbestimmungszeit (T11) definiert wird,
die Motorsteuerung (60) konfiguriert ist, bei einem Verstreichen der Fahrzeugstoppbestimmungszeit (T11) von dem Zeitpunkt, wenn die Abnormalität bei der Bremsvorrichtung (41, 42, 43, 44) erfasst wird, den Motor (31) zu veranlassen, regenerativ angetrieben zu werden, sodass der mobile Körper (10) verzögert wird, um gestoppt zu werden,
die Motorsteuerung (60) konfiguriert ist, die Fahrzeugstoppbestimmungszeit (T11) auf einer Grundlage einer regenerativ erzeugten Leistung zu ändern, die durch den regenerativen Antrieb des Motors (31) bei und nach dem Zeitpunkt, wenn die Abnormalität bei der Bremsvorrichtung (41, 42, 43, 44) erfasst wird, erzeugt wird.

2. Steuerungsvorrichtung (80) für mobile Körper nach Anspruch 1, wobei
die Motorsteuerung (60) konfiguriert ist, das Regenerationsdrehmoment des Motors (31) zu veranlassen, auf einer Grundlage einer Zeit, die von dem Zeitpunkt, wenn die Abnormalität bei der Bremsvorrichtung (41, 42, 43, 44) erfasst wird, verstreicht, oder auf einer Grundlage einer regenerativ erzeugten Leistung des Motors (31) geändert zu werden.

3. Steuerungsvorrichtung (80) für mobile Körper nach Anspruch 1 oder 2, ferner mit

einer Gaspedalpositionserfassungseinrichtung (50), die konfiguriert ist, einen Betätigungsbetrag eines Gaspedals des mobilen Körpers (10) zu erfassen, wobei
die Motorsteuerung (60) konfiguriert ist, eine Verzögerung des mobilen Körpers (10) auf einer Grundlage des Betätigungsbetrags des Gaspedals einzustellen, der von der Gaspedalpositionserfassungseinrichtung (50) erfasst wird.

4. Steuerungsvorrichtung (80) für mobile Körper nach einem der Ansprüche 1 bis 3, ferner mit:

einer Batteriesteuerung (63), die konfiguriert ist, die Batterie (33) zu steuern, wobei
die Batteriesteuerung (63) konfiguriert ist, im Ansprechen auf ein Bestimmen, dass die Batterie (33) wahrscheinlich überladen wird, eine Anforderung an die Motorsteuerung (60) zu stellen, um den regenerativen Antrieb von dem Motor (31) zu der Batterie (33) zu begrenzen, und
die Motorsteuerung (60) konfiguriert ist, die Anforderung von der Batteriesteuerung (63) zu ignorieren und den Motor (31) so zu steuern, dass das Notfall-Regenerationsdrehmoment (TBb) von dem Zeitpunkt, wenn die Abnormalität bei der Bremsvorrichtung (41, 42, 43, 44) erfasst wird, bis zu dem Verstreichen der Nachlaufzeit (TG) erzeugt wird.

5. Steuerungsvorrichtung (80) für mobile Körper nach Anspruch 4, wobei
die Motorsteuerung (60) konfiguriert ist, die Nachlaufzeit (TG) auf einer Grundlage einer regenerativ erzeugten Leistung zu ändern, die von dem regenerativen Antrieb des Motors (31) bei und nach dem Zeitpunkt, wenn die Abnormalität bei der Bremsvorrichtung (41, 42, 43, 44) erfasst wird, erzeugt wird.

6. Steuerungsvorrichtung (80) für mobile Körper nach einem der Ansprüche 1 bis 5, wobei
die Motorsteuerung (60) konfiguriert ist, eine Leistungsaufnahme einer elektrischen Last von dem Zeitpunkt, wenn die Abnormalität bei der Bremsvorrichtung (41, 42, 43, 44) erfasst wird, bis zu dem Verstreichen der Nachlaufzeit (TG) zu erhöhen, wobei die elektrische Last ein Ziel ist, zu dem die elektrische Leistung aus der Batterie (33) zuzuführen ist.

**Revendications**

1. Dispositif de commande (80) pour corps mobiles, qui est un dispositif de commande (80) pouvant être installé dans un corps mobile (10), le corps mobile (10) comportant un moteur (31) configuré pour fonctionner comme source d'énergie pour le mouvement et une batterie (33) configurée pour fournir une énergie électrique au moteur (31) et pour être chargée avec une énergie électrique générée par un entraînement régénératif du moteur (31), l'entraînement régénératif du moteur (31) et un actionnement d'un dispositif de freinage (41, 42, 43, 44) permettant d'appliquer une force de freinage au corps mobile (10), le dispositif de commande (80) comprenant :

un détecteur d'anomalie (61) configuré pour détecter une anomalie dans le dispositif de freinage (41, 42, 43, 44) ; et
un contrôleur de moteur (60) configuré pour contrôler le moteur (31), dans lequel,
lorsqu'un couple de régénération généré par l'entraînement de régénération du moteur lorsque le dispositif de freinage (41, 42, 43, 44) est normal est défini comme un couple de régénération normal (TBa),
le contrôleur de moteur (60) est configuré pour provoquer, en réponse au détecteur d'anomalie (61) détectant l'anomalie dans le dispositif de freinage (41, 42, 43), que le moteur (31) soit entraîné de manière régénérative indépendamment d'un état de charge de la batterie (33) jusqu'à l'expiration d'un temps de grâce prédéterminé (TG) à partir d'un moment où l'anomalie est détectée, de sorte qu'un couple de régénération d'urgence (TBb) supérieur au couple de régénération normal (TBa) soit généré, et **caractérisé en ce que**,

lorsqu'un temps inférieur au temps de grâce (TG) est défini comme temps de détermination d'arrêt du véhicule (T11),

le contrôleur de moteur (60) est configuré pour provoquer, à l'expiration du temps de détermination d'arrêt du véhicule (T11) à partir du moment où l'anomalie dans le dispositif de freinage (41, 42, 43, 44) est détectée, que le moteur (31) soit entraîné de manière régénérative de sorte que le corps mobile (10) soit décéléré pour être arrêté,

le contrôleur de moteur (60) est configuré pour changer le temps de détermination d'arrêt du véhicule (T11) sur une base d'une puissance régénérée générée par l'entraînement régénératif du moteur (31) au et après le moment où l'anomalie dans le dispositif de freinage (41, 42, 43, 44) est détectée.

2. Dispositif de commande (80) pour corps mobiles selon la revendication 1, dans lequel
le contrôleur de moteur (60) est configuré pour faire varier le couple de régénération du moteur (31) sur une base du temps écoulé à partir du moment où l'anomalie dans le dispositif de freinage (41, 42, 43, 44) est détectée ou sur une base d'une puissance régénéré générée par le moteur (31).

3. Dispositif de commande (80) pour corps mobiles selon la revendication 1 ou 2, comprenant en plus

un détecteur de position d'accélérateur (50) configuré pour détecter une quantité d'actionnement d'une pédale d'accélérateur du corps mobile (10), dans lequel
le contrôleur de moteur (60) est configuré pour régler une décélération du corps mobile (10) sur une base de la quantité d'actionnement de la pédale d'accélérateur détectée par le détecteur de position d'accélérateur (50).

4. Dispositif de commande (80) pour corps mobiles selon l'une quelconque des revendications 1 à 3, comprenant en outre :

un contrôleur de batterie (63) configuré pour contrôler la batterie (33), dans lequel,
en réponse à la détermination que la batterie (33) risque d'être surchargée, le contrôleur de batterie (63) est configuré pour demander au contrôleur de moteur (60) de limiter l'entraînement régénératif du moteur (31) vers la batterie (33), et
le contrôleur de moteur (60) est configuré pour ignorer la demande du contrôleur de batterie (63) et contrôler le moteur (31) de manière à ce que le couple de régénération d'urgence (TBb) soit généré jusqu'à l'expiration du temps de grâce (TG) à partir du moment où l'anomalie dans le dispositif de freinage (41, 42, 43, 44) est détectée.

5. Dispositif de commande (80) pour corps mobiles selon la revendication 4, dans lequel
le contrôleur de moteur (60) est configuré pour modifier le temps de grâce (TG) sur une base d'une puissance régénérée générée par l'entraînement régénératif du moteur (31) au et après le moment où l'anomalie dans le dispositif de freinage (41, 42, 43, 44) est détectée.

6. Dispositif de commande (80) pour corps mobiles selon l'une quelconque des revendications 1 à 5, dans lequel
le contrôleur de moteur (60) est configuré pour augmenter une consommation d'énergie d'une charge électrique jusqu'à l'expiration du temps de grâce (TG) à partir du moment où l'anomalie dans le dispositif de freinage (41, 42, 43, 44) est détectée, la charge électrique étant une cible à laquelle l'énergie électrique doit être fournie par la batterie (33).

# FIG.1

# FIG.2

EP 4 180 260 B1

# FIG.3

EP 4 180 260 B1

# FIG.4

# FIG.5

# FIG.6

```
                    ┌─────────┐
                    │  START  │
                    └────┬────┘
                         │
              ┌──────────▼──────────┐   S10
              │  SET FINAL TORQUE   │
              │ COMMAND VALUE T20*  │
              └──────────┬──────────┘
                         │              S11
                      ◇──▼──◇                    NO
                   ◇  XFB = 1 ?  ◇──────────────────────┐
                      ◇─────◇                           │
                         │ YES                          │
              ┌──────────▼──────────┐   S12             │
              │      C = C + 1      │                   │
              └──────────┬──────────┘                   │
                         │              S13             │
                   ◇─────▼─────◇      YES               │         S20
                ◇  C ≥ Cth11 ?  ◇──────────┐      ┌────────────────┐
                   ◇─────◇                 │      │     C = 0      │
                         │ NO              │      └────────┬───────┘
                         │            S15  │               │
                         │        ◇────▼────◇    YES        │
                         │     ◇  C ≥ Cth12 ? ◇────────────►│
                         │        ◇────◇                    │
                         │            │ NO                  │        S21
                         │       ┌────▼────┐  S16     ◇─────▼─────◇
                         │       │ XFE = 1 │       ◇  LIMITATION   ◇    NO
                         │       └────┬────┘      ◇ ON CHARGING AMOUNT ◇──┐
                         │            │           ◇   REQUESTED ?  ◇      │
                         │            │              ◇─────◇              │
                         │◄───────────┘                    │ YES          │
                         │                                 │      S22     │
                         │                           ◇─────▼─────◇        │
                         │                        ◇  T20* < TWin ? ◇  NO   │
                         │                           ◇─────◇────────────►  │
                         │                                 │ YES    S23    │
              ┌──────────▼──────────┐  S14          ┌──────▼──────┐        │
              │  REDUCE INCREASE IN │               │  T20* = TWin │        │
              │  POWER CONSUMPTION  │               └──────┬──────┘        │
              └──────────┬──────────┘                      │               │
                         │◄──────────────────────────────────────────────┘
              ┌──────────▼──────────┐  S30
              │  FAIL-SAFE CONTROL  │
              └──────────┬──────────┘
                         │
                    ┌────▼────┐
                    │   END   │
                    └─────────┘
```

# FIG.7

```
         ┌──────────────────────┐
         │   FAIL-SAFE CONTROL  │
         └──────────────────────┘
                    │
                    ▼        S31
              ◇─────────────◇────── NO
              ◇   XFB = 1 ? ◇
              ◇─────────────◇
                  │ YES
                  ▼          S32
         NO ◇─────────────◇
            ◇   XFE = 1 ? ◇
            ◇─────────────◇
                  │ YES
                  ▼
         ┌──────────────────────┐  S33
         │     DECELERATION     │
         │       CONTROL        │
         └──────────────────────┘
                  │
                  ▼
         ┌──────────────────────┐  S34
         │       WARNING        │
         └──────────────────────┘
                  │
                  ▼
         ┌──────────────────────┐
         │       RETURN         │
         └──────────────────────┘
```

# FIG.8

# FIG.9

(A)
SOC VALUE

(B)
OPERATION
AMOUNT AP OF
ACCELERATOR PEDAL

(C)
VEHICLE SPEED VC

(D)
BRAKING FORCE

(E)
FINAL TORQUE
COMMAND
VALUE T20*

(F)
LOWER LIMIT DMmin
OF ENERGIZATION
DUTY VALUE

(G)
COUNTER C

# FIG.10

START

SET FINAL TORQUE COMMAND VALUE T20* — S10

S11

XFB = 1 ? — NO

YES

C = C + ΔC — S12

S13

C ≥ Cth11 ? — YES

NO

S15

C ≥ Cth12 ? — YES

NO

XFE = 1 — S16

C = 0 — S20

S21

LIMITATION ON CHARGING AMOUNT REQUESTED ? — NO

YES

S22

T20* < TWin ? — NO

YES

T20* = TWin — S23

REDUCE INCREASE IN POWER CONSUMPTION — S14

FAIL-SAFE CONTROL — S30

END

# FIG.11

# FIG.12

START

SET FINAL TORQUE COMMAND VALUE T20* — S10

XFB = 1 ? — S11
NO →
YES ↓

C = C + △C — S12

C ≥ Cth11 ? — S13
YES →
NO ↓

C ≥ Cth12 ? — S15
YES →
NO ↓

XFE = 1 — S16

REDUCE INCREASE IN POWER CONSUMPTION — S14

PROCESS TO SET FINAL TORQUE COMMAND VALUE — S40

FAIL-SAFE CONTROL — S30

END

C = 0 — S20

LIMITATION ON CHARGING AMOUNT REQUESTED ? — S21
NO →
YES ↓

T20* < TWin ? — S22
NO →
YES ↓

T20* = TWin — S23

# FIG.13

# FIG.14

**EP 4 180 260 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6064375 B
- US 2018093571 A1
- US 9702304 B1
- JP 2015061450 A